# EUROPÄISCHE PATENTSCHRIFT

(11) **EP 2 325 477 B1**
(45) Veröffentlichungstag und Bekanntmachung des Hinweises auf die Patenterteilung: **04.07.2018**
(21) Anmeldenummer: 10186787.7
(22) Anmeldetag: 07.10.2010
(51) Int. Cl.: F02P 23/04, F02P 13/00, F02B 19/12

(54) **Laserzündkerze**
Laser spark plug
Bougie d'allumage au laser

(30) Priorität: 23.11.2009 DE 102009047019
(43) Veröffentlichungstag der Anmeldung: 25.05.2011
(73) Patentinhaber: Robert Bosch GmbH, 70442 Stuttgart (DE)
(72) Erfinder: Weinrotter, Martin, 70195, Stuttgart-Botnang (DE); Woerner, Pascal, 70469, Stuttgart (DE); Raimann, Juergen, 71263, Weil Der Stadt (DE); Engelhardt, Joerg, 71254, Ditzingen (Hirschlanden) (DE)

(56) Entgegenhaltungen:
- WO-A2-2006/011950
- DE-A1-102007 045 180
- DE-A1-102008 018 482
- FR-A1- 2 873 763
- JP-A- 58 162 773
- US-A- 4 930 473

## Beschreibung

### Stand der Technik

Die Erfindung betrifft eine Laserzündkerze, insbesondere für eine Brennkraftmaschine eines Kraftfahrzeugs oder einen Großgasmotor, mit einer Vorkammer zur Aufnahme eines zündfähigen Mediums und mindestens einem eine Fluidverbindung zwischen einem Innenraum der Vorkammer und einem die Vorkammer umgebenden Außenraum ermöglichendem Überströmkanal.

Aus der FR 2 873 763 A1, JP 58 162773 A, US 4 930 473 A, WO 2006/011950 A2, DE 10 2008 018482 A1 sind Laserzündkerzen bekannt.

### Offenbarung der Erfindung

Es ist Aufgabe der vorliegenden Erfindung, eine Laserzündkerze der eingangs genannten Art dahingehend zu verbessern, dass ein zuverlässiger Betrieb und eine erhöhte Standzeit gewährleistet ist.

Diese Aufgabe wird bei einer Laserzündkerze der eingangs genannten Art insbesondere dadurch gelöst, dass der mindestens eine Überströmkanal so angeordnet und ausgebildet ist, dass sich beim Einströmen eines Fluids durch den Überströmkanal in den Innenraum der Vorkammer eine Fluidströmung ergibt, die mindestens einen Wirbel aufweist, der sich um eine Wirbelachse dreht, die einen Winkel von mehr als etwa 45° einschließt mit einer Längsachse der Laserzündkerze.

Besonders bevorzugt ist der mindestens eine Überströmkanal außerhalb der Längsachse angeordnet.

Insbesondere ist erkannt worden, dass eine derartige Fluidströmung günstigerweise dazu beiträgt, Staupunktströmungen im Bereich einer Oberfläche eines Brennraumfensters der Laserzündkerze zu vermeiden. Infolgedessen können Ölaschen oder sonstige Partikel, die bei der Verbrennung in der Vorkammer entstehen, nur noch in einem geringeren Maße auf der Oberfläche des Brennraumfensters aufwachsen, so dass eine zuverlässigere Laserzündung und eine größere Standzeit als bei den konventionellen Laserzündsystemen mit Vorkammer gewährleistet ist.

Bei einer besonders bevorzugten Ausführungsform der erfindungsgemäßen Laserzündkerze beträgt der Winkel zwischen der Wirbelachse und der Längsachse der Laserzündkerze zwischen etwa 80° und etwa 90°, vorzugsweise etwa 90°. Eine Fluidströmung, die einer derartigen Winkelbedingung in Bezug auf die Längsachse der Laserzündkerze genügt, wird auch als sogenannte Tumble-Strömung bezeichnet.

Die insbesondere erzielte Ausbildung einer Tumble-Strömung ermöglicht besonders vorteilhaft, eine Oberfläche des Brennraumfensters der Laserzündkerze vor dem Aufwachsen von Verbrennungsprodukten zu schützen, weil sie eine auf das Brennraumfenster gerichtete Normalkomponente der Strömungsgeschwindigkeit stark reduziert bzw. eliminiert.

Die erfindungsgemäße Ausbildung einer Tumble-Strömung wird einer weiteren Erfindungsvariante zufolge dadurch begünstigt, dass der mindestens eine Überströmkanal so angeordnet ist, dass seine Längsachse in radialer Richtung einen Winkel mit der Längsachse der Laserzündkerze einschließt, der weniger als etwa 25° beträgt, vorzugsweise etwa weniger als 10°.

Besonders bevorzugt sind einer weiteren Ausführungsform zufolge mehrere Überströmkanäle vorgesehen, wobei die Längsachsen zueinander benachbarter Überströmkanäle einen Winkel von maximal 20° einschließen, vorzugsweise maximal einen Winkel von 10°.

Diese Erfindungsvariante wird bevorzugt bei solchen Überströmkanälen eingesetzt, deren Mündungsöffnungen in einem brennraumzugewandten stirnseitigen Bereich der Vorkammer angeordnet sind.

Erfindungsgemäß sind mehrere Überströmkanäle vorgesehen, die so angeordnet und ausgebildet sind, dass sich die Längsachsen mindestens dreier Überströmkanäle in einem in dem Innenraum der Vorkammer liegenden Schnittpunkt schneiden. Die hierbei erfolgende Addition der durch die einzelnen Überströmkanäle fließenden Teilströmungen begünstigt die Ausbildung einer besonders starken Fluidströmung im Sinne einer Tumble-Strömung.

Erfindungsgemäß ist ferner, dass der Schnittpunkt in einem radial äußeren Bereich der Vorkammer liegt. Der Schnittpunkt ist insbesondere wenigstens 50% bis etwa 70% eines Radius der Vorkammer von der Längsachse der Laserzündkerze bzw. der Vorkammer entfernt.

Eine für eine effiziente Zündung erforderliche, möglichst gleichmäßige Verteilung von Zündfackeln, die aus der Vorkammer austreten, ist einer weiteren Erfindungsvariante zufolge dann gewährleistet, wenn in den Außenraum mündende Öffnungen derjenigen Überströmkanäle, deren Längsachsen sich in dem Innenraum der Vorkammer schneiden, im Wesentlichen gleichmäßig voneinander und/oder der Längsachse der Laserzündkerze beabstandet sind, insbesondere im Bereich der Ecken eines fiktiven n-Ecks liegen, wobei n ≥ 3 ist.

Einer weiteren vorteilhaften Erfindungsvariante zufolge kann mindestens ein strömungsführendes Element vorgesehen sein, das dazu ausgebildet ist, die Fluidströmung zu unterstützen und insbesondere tangential an einer der Vorkammer zugewandten Oberfläche eines Brennraumfensters vorbeizuleiten. Hierfür kann das mindestens eine strömungsführende Element eine strömungsführende Oberfläche aufweisen, die in ihrer Form in etwa einer Außenkontur einer als ideal angesehenen Tumble-Strömung bzw. eines zugehörigen Wirbels entspricht.

Eine optimale Ausbildung einer derartigen Tumble-Strömung wird einer weiteren vorteilhaften Erfindungsvariante zufolge dadurch begünstigt, dass ein Brennraumfenster vorgesehen und so angeordnet ist, dass seine der Vorkammer zugewandte Oberfläche zumindest bereichsweise bündig mit einer Innenwand der Vorkammer abschließt.

Eine optimale Umsetzung des in der Vorkammer befindlichen zündfähigen Gemischs ergibt sich einer weiteren Erfindungsvariante zufolge dann, wenn die Laserzündkerze dazu ausgebildet ist, Laserstrahlung auf einen in der Vorkammer liegenden Zündpunkt einzustrahlen, dessen Abstand zu einem Brennraumfenster geringer ist als sein Abstand zu einem brennraumzugewandten Endbereich der Vorkammer, insbesondere um mindestens etwa 50% geringer. Dadurch wird vorteilhaft erreicht, dass ein bei der Laserzündung in dem Zündpunkt entstehender Flammkern von der erfindungsgemäß erzeugten Tumble-Strömung mitgenommen und in einen brennraumzugewandten Endbereich der Vorkammer geführt wird. Die weitere Entwicklung einer Flammenfront in diesem Bereich hat den besonderen Vorteil, dass weniger unverbranntes Gemisch aus der Vorkammer in den Außenraum bzw. Brennraum ausgeschoben wird, wodurch die Effizienz der Laserzündung in der Vorkammer steigt.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

In der Zeichnung zeigt:
- Figur 1: eine erste Ausführungsform einer erfindungsgemäßen Laserzündkerze in einem teilweisen Querschnitt,
- Figur 2: eine weitere Ausführungsform der erfindungsgemäßen Laserzündkerze mit optimierter Strömungsführung in einem Grenzbereich zwischen Brennraumfenster und Innenwand der Vorkammer,
- Figuren 3a, 3b: weitere Varianten einer erfindungsgemäßen Laserzündkerze,
- Figur 4: eine Frontalansicht auf ein brennraumzugewandtes Ende einer weiteren Ausführungsform der erfindungsgemäßen Laserzündkerze,
- Figur 5: eine perspektivische Ansicht eines brennraumzugewandten Endbereichs einer weiteren Ausführungsform der erfindungsgemäßen Laserzündkerze, und
- Figuren 6a - 6d: verschiedene Betriebsphasen der erfindungsgemäßen Laserzündkerze.

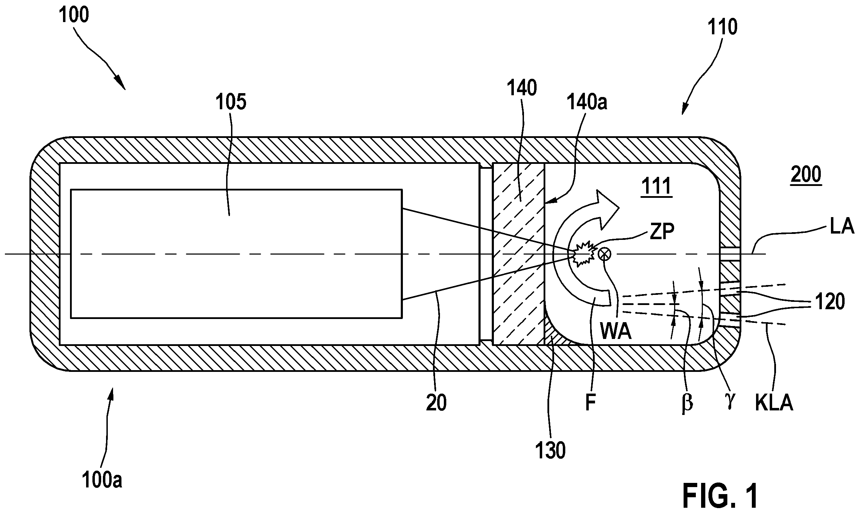

Figur 1 zeigt einen teilweisen Querschnitt einer ersten Ausführungsform der erfindungsgemäßen Laserzündkerze 100. Die Laserzündkerze 100 verfügt über eine integrierte Lasereinrichtung 105, die Laserstrahlung 20 erzeugen und auf den in einer Vorkammer 110 der Laserzündkerze 100 liegenden Zündpunkt ZP bündeln kann.

Der Innenraum der Vorkammer 110 ist von dem brennraumabgewandten Teil 100a der Laserzündkerze 100 durch ein Brennraumfenster 140 getrennt.

Ferner verfügt die Laserzündkerze 100 bzw. ihre Vorkammer 110 über Überströmkanäle 120, die eine Fluidverbindung zwischen der Vorkammer 110 und einem Außenbereich 200, bei dem es sich in Einbaulage der Laserzündkerze 100 in einer Brennkraftmaschine beispielsweise um einen Brennraum der Brennkraftmaschine handeln kann, ermöglichen.

Erfindungsgemäß ist mindestens ein Überströmkanal 120 so angeordnet und ausgebildet, dass sich beim Einströmen eines Fluids durch den Überströmkanal 120 in den Innenraum 111 der Vorkammer 110 eine Fluidströmung F ergibt, die mindestens einen Wirbel aufweist, der sich um eine Wirbelachse WA dreht, die einen Winkel von mehr als etwa 45° einschließt mit einer Längsachse LA der Laserzündkerze 100.

Besonders bevorzugt ist der Überströmkanal 120 außerhalb der Längsachse LA angeordnet, was die Bildung der erfindungsgemäßen Fluidströmung F weiter begünstigt.

Vorliegend ist die sich erfindungsgemäß ausbildende Fluidströmung durch den Blockpfeil F symbolisiert. Eine entsprechende Wirbelachse steht in Figur 1 senkrecht zur Zeichenebene. Vorliegend schließt die Wirbelachse WA demnach einen rechten Winkel mit der Längsachse LA der Laserzündkerze 100 ein. In diesem Fall spricht man bei der erfindungsgemäß vorgesehenen Fluidströmung F auch von einer sogenannten Tumble-Strömung.

Die Tumble-Strömung F besitzt vorteilhaft nur eine tangentiale Strömungsgeschwindigkeitskomponente bezüglich der Oberfläche 140a des Brennraumfensters 140, so dass die Ablagerung von Verbrennungsprodukten auf der Oberfläche 140a vorteilhaft verhindert wird.

Zur weiteren Unterstützung der Tumble-Strömung F kann auch mindestens ein strömungsführendes Element 130 in der Vorkammer 110 vorgesehen sein.

Einer besonders bevorzugten Erfindungsvariante zufolge ist mindestens ein Überströmkanal 120 so angeordnet, dass seine Längsachse KLA bezüglich der Längsachse LA der Laserzündkerze 100 in radialer Richtung einen Winkel β mit der Längsachse LA der Laserzündkerze 100 einschließt, der weniger als etwa 25° beträgt, vorzugsweise weniger als etwa 10°.

Einer weiteren Ausführungsform der Erfindung zufolge kann ferner vorgesehen sein, dass mehrere Überströmkanäle 120 so ausgerichtet sind, dass die Längsachsen zueinander benachbarter Überströmkanäle einen Winkel γ von maximal 20° einschließen, vorzugsweise einen Winkel von maximal 10°. Dies gilt sowohl für eine Betrachtung in bezüglich der Längsachse LA radialer wie auch axialer Richtung.

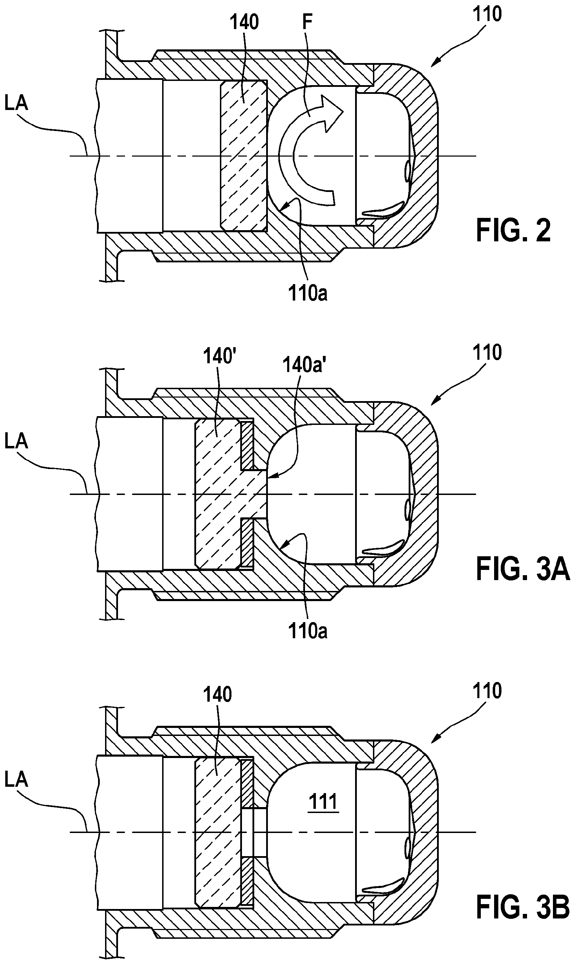

Figur 2 zeigt einen teilweisen Querschnitt einer weiteren Ausführungsform der erfindungsgemäßen Laserzündkerze, bei der die Vorkammer 110 bereits so geformt ist, dass sie aufgrund entsprechend gerundeter Innenwandabschnitte 110a eine optimierte Strömungsführung gewährleistet. In diesem Fall ist kein separates strömungsführendes Element 130, vgl. Figur 1, erforderlich.

Figur 3a zeigt eine weitere Ausführungsform einer erfindungsgemäßen Vorkammer 110, bei der ein Brennraumfenster 140' vorgesehen ist, das einen im Wesentlichen T-förmigen Querschnitt aufweist. Dies ermöglicht eine verbesserte Einpassung des Brennraumfensters 140' in entsprechende, vorliegend nicht näher bezeichnete, Aufnahmemittel der Laserzündkerze 100. Darüber hinaus kann auch das Brennraumfenster 140' wiederum vorteilhaft so bezüglich der Vorkammer 110 angeordnet werden, dass eine der Vorkammer 110 zugewandte Oberfläche 140a' des Brennraumfensters 140' bündig abschließt mit einem Innenwandabschnitt 110a der Vorkammer 110.

Figur 3b zeigt eine weitere Variante einer Vorkammer 110 für eine erfindungsgemäße Laserzündkerze, bei der das Brennraumfenster 140 bezüglich dem Innenraum 111 der Vorkammer 110 um einen nichtverschwindenden Abstand zurückversetzt ist, was ebenfalls ein Aufwachsen von Verbrennungsprodukten auf dem Brennraumfenster 140 vermindert.

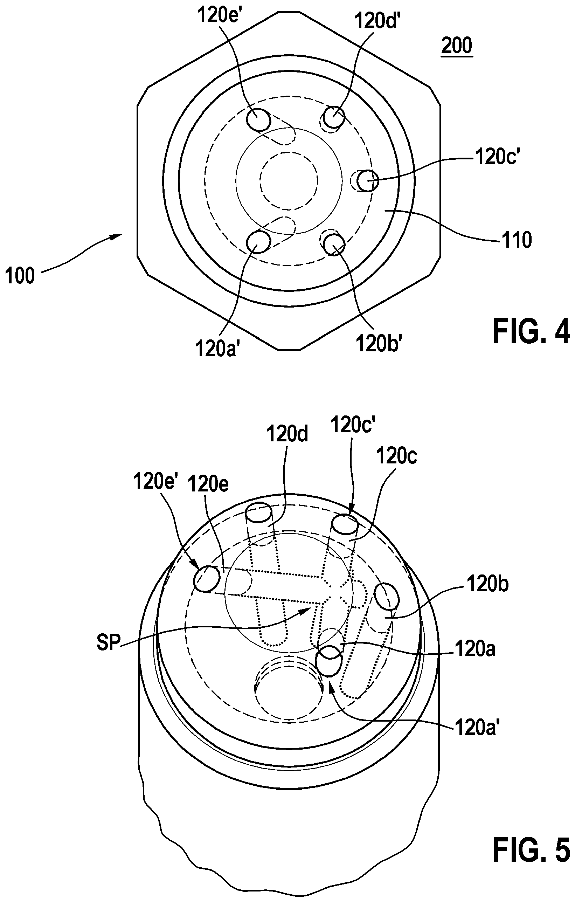

Figur 4 zeigt eine Frontalansicht einer weiteren Ausführungsform einer erfindungsgemäßen Laserzündkerze, bei der die Vorkammer 110 insgesamt fünf Überströmkanäle aufweist, von denen jeweils nur die in den die Vorkammer 110 umgebenden Außenraum 200 mündenden Öffnungen 120a', 120b', 120c', 120d', 120e' bezeichnet sind.

Aus Figur 4 ist ersichtlich, dass eine - bezüglich der Längsachse LA (Figur 1) - im Wesentlichen unsymmetrische Anordnung der Überströmkanäle bzw. ihrer betreffenden Öffnungen 120a', 120b', 120c', 120d', 120e' zu dem Außenraum 200 hin ebenfalls dazu geeignet ist, eine erfindungsgemäße Tumble-Strömung zu ermöglichen.

Figur 5 zeigt eine perspektivische Ansicht der erfindungsgemäßen Laserzündkerze, bei der ebenfalls wiederum fünf Überströmkanäle 120a, 120b, 120c, 120d, 120e vorgesehen sind.

Die Überströmkanäle 120a, 120b, 120c, 120d, 120e sind vorliegend so angeordnet und ausgebildet, dass sich die Längsachsen mindestens dreier Überströmkanäle 120a, 120c, 120e in dem Innenraum 111 (Figur 1) der Vorkammer 110 schneiden, und zwar in einem Schnittpunkt SP, wodurch sich die einzelnen Teilströmungen vorteilhaften zu einer Tumble-Strömung F (Figur 1) addieren.

Eine besonders effiziente Ausbildung einer erfindungsgemäßen Fluidströmung F in dem Innenraum der Vorkammer 110 ist dann gewährleistet, wenn der Schnittpunkt SP in einem radial äußeren Bereich der Vorkammer 110 liegt, wobei der Schnittpunkt SP insbesondere einen Abstand von etwa 50% bis etwa 70% des Radius der Vorkammer 110 von der Längsachse LA der Laserzündkerze 100 aufweist.

Eine im Wesentlichen gleichmäßige Beaufschlagung des Außenraums bzw. Brennraums 200 durch aus der Vorkammer 110 austretende Zündfackeln ist einer weiteren vorteilhaften Erfindungsvariante zufolge dadurch gewährleistet, dass in den Außenraum 200 mündende Öffnungen 120a', 120c', 120e' (Figur 5) derjenigen Überströmkanäle 120a, 120c, 120e, deren Längsachsen sich in dem Innenraum 111 der Vorkammer 110 schneiden, im Wesentlichen gleichmäßig voneinander und/oder von der Längsachse LA der Laserzündkerze 100 beabstandet sind, insbesondere im Bereich der Ecken eines fiktiven n-Ecks liegen, wobei n ≥ 3 ist.

Diese Konfiguration begünstigt gleichzeitig bei einem Einströmen von Fluid aus dem Außenraum 200 in den Innenraum 111 der Vorkammer 110 eine vorteilhafte Addition der Teilströmungen der drei sich schneidenden Überströmkanäle derart, dass an dem Austrittsende im Bereich des Schnittpunkts der Überströmkanäle eine verstärkte erfindungsgemäße Fluidströmung F vorliegt.

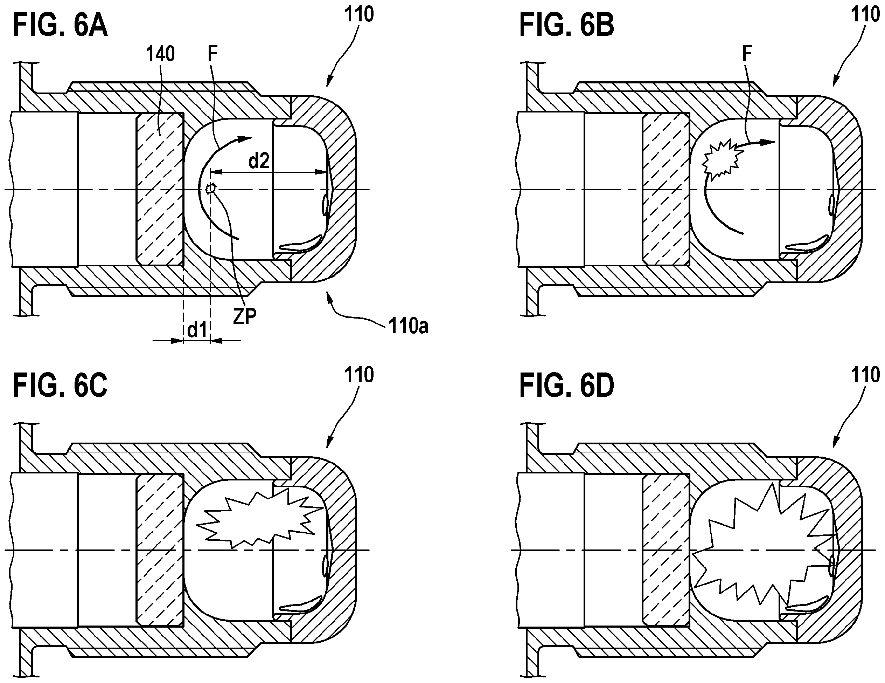

Die Figuren 6a bis 6d zeigen verschiedene Betriebsphasen einer erfindungsgemäßen Laserzündkerze 100.

Durch die erfindungsgemäße Ausbildung der Laserzündkerze 100 derart, dass Laserstrahlung 20 auf einen in der Vorkammer 110 liegenden Zündpunkt ZP eingestrahlt wird, dessen Abstand d1 zu einem Brennraumfenster 140 geringer ist als sein Abstand d2 zu einem brennraumzugewandten Endbereich 110a der Vorkammer 110, ergibt sich vorteilhaft eine Mitnahme eines in dem Zündpunkt ZP erzeugten Flammkerns durch die erfindungsgemäße Fluidströmung F, die vorliegend in einer dem Uhrzeigersinn folgenden Bewegung des Flammkerns durch den Innenraum 111 der Vorkammer 110 resultiert, vgl. Figuren 6b bis 6d. Nach der Laserzündung trägt die erfindungsgemäße Fluidströmung F den Flammerkern im Uhrzeigersinn in Richtung des brennraumzugewandten Endbereichs 110a (Figur 6a) der Vorkammer 110, so dass die Flamme anschließend von dort aus den verbleibenden Rest des Vorkammervolumens entflammt. Somit wird im Vergleich zu herkömmlichen Vorkammern ohne Tumble-Strömung, bei der eine Flammenfront von einem Brennraumfenster aus in Richtung des brennraumzugewandten Endbereichs 110a brennt, weniger unverbranntes Gemisch aus der Vorkammer 110 in den Hauptbrennraum 200 ausgeschoben, wenn der Druck in der Vorkammer 110 durch die einsetzende Verbrennung ansteigt. Das Vorkammervolumen wird unter Anwendung des erfindungsgemäßen Prinzips also effizienter genutzt als bei herkömmlichen Laserzündkerzen.

Dies ermöglicht vorteilhaft, die betreffenden Komponenten, insbesondere die Vorkammer 110, kleiner auszulegen als bei herkömmlichen Systemen, ohne Einbußen hinsichtlich der Zündleistung in Kauf nehmen zu müssen.

Aufgrund der bei einigen Ausführungsformen der erfindungsgemäßen Laserzündkerze unsymmetrischen Anordnung der Überströmkanäle 120 kann eine gerichtete Montage der erfindungsgemäßen Laserzündkerze 100 bezüglich des Zylinderkopfes des Zielsystems erforderlich sein.

Die Vorsehung von gekrümmten Überströmkanälen kann vorteilhaft dazu beitragen, aus der Vorkammer 110 in den Brennraum 200 austretende Zündfackeln in eine gewünschte Richtung zu lenken, insbesondere gleichmäßig in dem Brennraum 200 zu verteilen.

## Patentansprüche

1. Laserzündkerze (100), insbesondere für eine Brennkraftmaschine eines Kraftfahrzeugs oder einen Großgasmotor, mit einer Vorkammer (110) zur Aufnahme eines zündfähigen Mediums und mindestens einem eine Fluidverbindung zwischen einem Innenraum (111) der Vorkammer (110) und einem die Vorkammer (110) umgebenden Außenraum (200) ermöglichendem Überströmkanal (120), **dadurch gekennzeichnet,**
**dass** mehrere Überströmkanäle (120a, 120b, 120c, 120d, 120e) vorgesehen sind, die so angeordnet und ausgebildet sind, dass sich die Längsachsen mindestens dreier Überströmkanäle (120a, 120c, 120e) in einem in dem Innenraum (111) der Vorkammer (110) liegenden Schnittpunkt (SP) schneiden und dass der Schnittpunkt (SP) in einem radial äußeren Bereich der Vorkammer (110) liegt.

2. Laserzündkerze (100) nach Anspruch 1, **dadurch gekennzeichnet, dass** die Längsachsen zueinander benachbarter Überströmkanäle einen Winkel (γ) von maximal 20° einschließen, vorzugsweise einen Winkel von maximal 10°.

3. Laserzündkerze (100) nach Anspruch 1 oder 2, **dadurch gekennzeichnet, dass** in den Außenraum (200) mündende Öffnungen (120a', 120c', 120e') derjenigen Überströmkanäle (120a, 120c, 120e), deren Längsachsen sich in dem Innenraum (111) der Vorkammer (110) schneiden, im wesentlichen gleichmäßig voneinander und/oder der Längsachse (LA) der Laserzündkerze (100) beabstandet sind, insbesondere im Bereich der Ecken eines fiktiven n-Ecks liegen, wobei n >= 3 ist.

4. Laserzündkerze (100) nach einem der vorstehenden Ansprüche, **dadurch gekennzeichnet, dass** mindestens ein strömungsführendes Element (130) vorgesehen ist, das dazu ausgebildet ist, die Fluidströmung (F) zu unterstützen und insbesondere tangential an einer der Vorkammer (110) zugewandten Oberfläche (140a) eines Brennraumfensters (140) vorbeizuleiten.

5. Laserzündkerze (100) nach einem der vorstehenden Ansprüche, **dadurch gekennzeichnet, dass** ein Brennraumfenster (140) vorgesehen und so angeordnet ist, dass seine der Vorkammer (110) zugewandte Oberfläche (140a) zumindest bereichsweise bündig mit einer Innenwand (110a) der Vorkammer (110) abschließt.

6. Laserzündkerze (100) nach einem der vorstehenden Ansprüche, **dadurch gekennzeichnet, dass** die Laserzündkerze (100) dazu ausgebildet ist, Laserstrahlung (20) auf einen in der Vorkammer (110) liegenden Zündpunkt (ZP) einzustrahlen, dessen Abstand (d1) zu einem Brennraumfenster (140) geringer ist als sein Abstand (d2) zu einem brennraumzugewandten Endbereich (110a) der Vorkammer (110), insbesondere um mindestens etwa 50 Prozent geringer.

## Claims

1. Laser spark plug (100), in particular for an internal combustion engine of a motor vehicle or for a large-bore gas engine, comprising an antechamber (110) for accommodating an ignitable medium and comprising at least one overflow channel (120) which allows a fluid connection between an interior (111) of the antechamber (110) and an exterior (200) which surrounds the antechamber (110), **characterized in that** a plurality of overflow channels (120a, 120b, 120c, 120d, 120e) are provided and are arranged and designed such that the longitudinal axes of at least three overflow channels (120a, 120c, 120e) intersect at a point of intersection (SP) which is situated in the interior (111) of the antechamber (110), and that the point of intersection (SP) is situated in a radially outer region of the antechamber (110).

2. Laser spark plug (100) according to Claim 1, **characterized in that** the longitudinal axes of overflow channels which are adjacent to one another enclose an angle (γ) of at most 20°, preferably an angle of at most 10°.

3. Laser spark plug (100) according to Claim 1 or 2, **characterized in that** openings (120a', 120c', 120e'), which issue into the exterior (200), of those overflow channels (120a, 120c, 120e) of which the longitudinal axes intersect in the interior (111) of the antechamber (110) are at a substantially identical distance from one another and/or the longitudinal axis (LA) of the laser spark plug (100), in particular in the region of the corners of an imaginary n-sided shape, wherein n >= 3.

4. Laser spark plug (100) according to one of the preceding claims, **characterized in that** at least one flow-carrying element (130) is provided, which is designed to assist the fluid flow (F) and to conduct the said fluid flow, in particular tangentially, past a surface (140a), which faces the antechamber (100), of a combustion chamber window (140).

5. Laser spark plug (100) according to one of the preceding claims, **characterized in that** a combustion chamber window (140) is provided and arranged such that its surface (140a) which faces the antechamber (110) terminates flush with an inner wall (110a) of the antechamber (110) at least in regions.

6. Laser spark plug (100) according to one of the preceding claims, **characterized in that** the laser spark plug (100) is designed to emit laser radiation (20) onto an ignition point (ZP) which is situated in the antechamber (110), the distance (d1) of the said ignition point in relation to a combustion chamber window (140) being smaller than the distance (d2) of the said ignition point from an end region (110a), which faces the combustion chamber, of the antechamber (110), in particular smaller by at least approximately 50 per cent.

## Revendications

1. Bougie d'allumage au laser (100), en particulier pour un moteur à combustion interne d'un véhicule automobile ou d'un gros moteur à essence, comprenant une préchambre (110) pour recevoir un milieu inflammable et au moins un canal de trop-plein (120) permettant une liaison fluidique entre un espace intérieur (111) de la préchambre (110) et un espace extérieur (200) entourant la préchambre (110), **caractérisée en ce que** plusieurs canaux de trop-plein (120a, 120b, 120c, 120d, 120e) sont prévus, lesquels sont disposés et réalisés de telle sorte que les axes longitudinaux d'au moins trois canaux de trop-plein (120a, 120c, 120e) se coupent en un point d'intersection (SP) situé dans l'espace intérieur (111) de la préchambre (110) et que le point d'intersection (SP) soit situé dans une région radialement extérieure de la préchambre (110).

2. Bougie d'allumage au laser (100) selon la revendication 1, **caractérisée en ce que** les axes longitudinaux de canaux de trop-plein adjacents les uns aux autres forment un angle (γ) de 20° maximum, de préférence un angle de 10° maximum.

3. Bougie d'allumage au laser (100) selon la revendication 1 ou 2, **caractérisée en ce que** des ouvertures (120a', 120c', 120e'), débouchant dans l'espace extérieur (200), des canaux de trop-plein (120a, 120c, 120e) dont les axes longitudinaux se coupent dans l'espace intérieur (111) de la préchambre (110), sont espacées essentiellement uniformément les unes des autres et/ou de l'axe longitudinal (LA) de la bougie d'allumage au laser (100), en particulier se situent dans la région des coins d'un polygone fictif à n côtés, où n ≥ 3.

4. Bougie d'allumage au laser (100) selon l'une quelconque des revendications précédentes, **caractérisée en ce qu'**au moins un élément conduisant l'écoulement (130) est prévu, lequel est réalisé de manière à favoriser l'écoulement de fluide (F) et notamment à le conduire tangentiellement devant une surface (140a) d'une fenêtre de la chambre de combustion (140) tournée vers la préchambre (110).

5. Bougie d'allumage au laser (100) selon l'une quelconque des revendications précédentes, **caractérisée en ce qu'**une fenêtre de la chambre de combustion (140) est prévue et est disposée de telle sorte que sa surface (140a) tournée vers la préchambre (110) se termine au moins en partie en affleurement avec une paroi intérieure (110a) de la préchambre (110).

6. Bougie d'allumage au laser (100) selon l'une quelconque des revendications précédentes, **caractérisée en ce que** la bougie d'allumage au laser (100) est réalisée de manière à injecter un rayonnement laser (20) sur un point d'allumage (ZP) situé dans la préchambre (110), dont la distance (d1) à une fenêtre de la chambre de combustion (140) est inférieure à sa distance (d2) à une région d'extrémité (110a) de la préchambre (110) tournée vers la chambre de combustion, en particulier inférieure d'au moins environ 50 pour cent.
